# EUROPEAN PATENT SPECIFICATION

(11) **EP 3 589 477 B1**
(45) Date of publication and mention of the grant of the patent: **28.06.2023**
(21) Application number: 18761166.0
(22) Date of filing: 08.02.2018
(51) Int. Cl.: B33Y 40/20

(54) **3-D PRINTING USING SPRAY FORMING**
3D-DRUCK MITTELS SPRÜHFORMUNG
IMPRESSION 3D À L'AIDE D'UNE MISE EN FORME PAR PULVÉRISATION

(30) Priority: 01.03.2017 US 201715446932
(43) Date of publication of application: 08.01.2020
(73) Proprietor: Divergent Technologies Inc., Los Angeles, California 90502 (US)
(72) Inventor: CZINGER, Kevin Robert, Santa Monica, California 90401 (US); TENHOUTEN, Broc WIlliam, Rancho Palos Verdes, California 90275 (US); LAKSHMAN, Narender Shankar, Torrance, California 90503 (US)
(74) Representative: Dentons UK and Middle East LLP
(86) International application number: PCT/US2018/017364
(87) International publication number: WO 2018/160337

(56) References cited:
- WO-A1-2015/123732
- WO-A2-2005/097476
- US-A1- 2001 043 990
- US-A1- 2005 173 838
- US-A1- 2006 035 034
- US-A1- 2008 169 585
- US-A1- 2009 271 323
- US-A1- 2013 295 338
- US-A1- 2013 295 338
- US-A1- 2015 210 009

## Description

### CROSS-REFERENCE TO RELATED APPLICATIONS

This application claims the benefit of U.S. Patent Application No. 15/446,932, entitled 3-D PRINTING USING SPRAY FORMING, and filed on March 1, 2017.

### BACKGROUND

### Field

The present disclosure relates generally to manufacturing techniques, and more specifically 3D-printing methods using spray forming.

### Background

Key technological developments and advances in manufacturing have been made in recent years with the increasingly widespread use of three dimensional (3-D) printing for a variety of applications. Such applications are especially prevalent in the context of manufacturing numerous types of sophisticated mechanical structures. Similar advances have recently been made, and milestones achieved, relative to the advancement of 3-D printing technologies themselves. The plethora of modem 3-D printing techniques that have been the subject of such recent advances include, for example, stereolithography (SLA), digital light processing (DLP), fused deposition modeling (FDM), selective laser sintering (SLS), selective laser melting (SLM), and the like.

Various limitations with existing 3D-printing applications persist. As an illustration, 3-D printing using FDM and other techniques rely on the successive deposition of layers of material. As a result of this layer-by-layer deposition technique, printed parts may exhibit a stair-stepped effect, especially with respect to angled surfaces. Where the printed part is, by way of example, a panel such as a hood for a vehicle, the part may fall out of applicable vehicular requirements and specifications. Thus these printed parts may require additional sanding, machining, or other finishing steps to make them smooth.

For example, using conventional manufacturing techniques, a panel may be 3-D printed. Thereafter, the part may be prepared for a second manufacturing step wherein the stair-stepped effect is reduced or eliminated using sanding, hand spray forming, or some other process. Requiring separate manufacturing steps to produce a smooth 3D-printed part may result in manufacturing inefficiencies, added complexity, and increased cost. Additionally, since in the conventional method the stair-stepped effect is often eliminated using techniques not calibrated with the 3-D printer that produced the part, accuracy in the resulting printed part may be compromised.

WO2015/123732 discloses a method for fabricating a composite construction element, used to construct buildings, bridges or similar structures, using a computer- controlled apparatus. The method involves providing computer instructions derived from a 3D model of a composite construction element to the apparatus, selectively operating the apparatus to fabricate a core from a first building material, selectively applying a settable second building material to the core to form a skin thereon, and at least partially curing the skin to form a shell at least partially enclosing the core, the core and shell thereby forming the composite construction element.

### SUMMARY

The invention is carried out by the method according to claim 1. Embodiments of the disclosure are set forth in the dependent claims.

Several aspects of methods will be described more fully hereinafter with reference to three-dimensional printing techniques.

One aspect of a method of three-dimensional (3-D) printing a structure includes receiving instructions for printing the structure, the instructions based on a data model of the structure, receiving material, and printing the structure based on the instructions, the printing comprising spray forming the material to produce the structure.

According to the invention the printing including forming successive layers of the material to produce an intermediate structure having a stair-stepped surface portion, and spray forming the material onto the stair-stepped surface portion to produce the structure from the intermediate structure by smoothing the stair-stepped surface portion.

According to one embodiment, the method of three-dimensional (3-D) printing a structure includes receiving a nominal dimension and a corresponding tolerance for one or more layers of the structure, printing the structure based on the instructions, the printing including forming successive layers of the material to produce an intermediate structure, scanning the intermediate structure to determine a physical dimension of the one or more layers, and spray forming selected portions of the intermediate structure to produce the structure such that the physical dimension falls within the received tolerance of the nominal dimension.

It will be understood that other aspects of 3-D printing using spray forming will become readily apparent to those skilled in the art from the following detailed description, wherein it is shown and described only several embodiments by way of illustration. As will be realized by those skilled in the art, the panels, tooling shells and methods for producing panels are capable of other and different embodiments and its several details are capable of modification in various other respects, all without departing from the invention. Accordingly, the drawings and detailed description are to be regarded as illustrative in nature and not as restrictive.

### BRIEF DESCRIPTION OF THE DRAWINGS

Various aspects of 3-D printing using spray forming will now be presented in the detailed description by way of example, and not by way of limitation, in the accompanying drawings, wherein:
FIGS. 1A-B illustrate a diagram of a conventional 3-D printer using fused deposition modeling (FDM).
FIG. 2 is a flow diagram illustrating an exemplary process of 3-D printing.
FIGS. 3A, 3B and 3C are illustrations of a desired part and a build plate supporting a resulting 3-D printed part.
FIG. 4 is a diagram of a 3-D printer employing spray forming.
FIG. 5 is a diagram of a 3-D printer integrating spray forming and fused deposition modeling (FDM) printing.
FIGS. 6A-B are a flow diagram illustrating an exemplary method for 3-D printing using spray forming.
FIG. 7 is a flow diagram illustrating an exemplary method for 3-D printing using *in situ* monitoring of stair-stepped effects of the 3-D printed structure.

### DETAILED DESCRIPTION

The detailed description set forth below in connection with the appended drawings is intended to provide a description of various exemplary embodiments of 3-D printing using spray forming and is not intended to represent the only embodiments in which the invention may be practiced. The term "exemplary" used throughout this disclosure means "serving as an example, instance, or illustration," and should not necessarily be construed as preferred or advantageous over other embodiments presented in this disclosure. The detailed description includes specific details for the purpose of providing a thorough and complete disclosure that fully conveys the scope of the invention to those skilled in the art. However, the invention may be practiced without these specific details. In some instances, well-known structures and components may be shown in block diagram form, or omitted entirely, in order to avoid obscuring the various concepts presented throughout this disclosure.

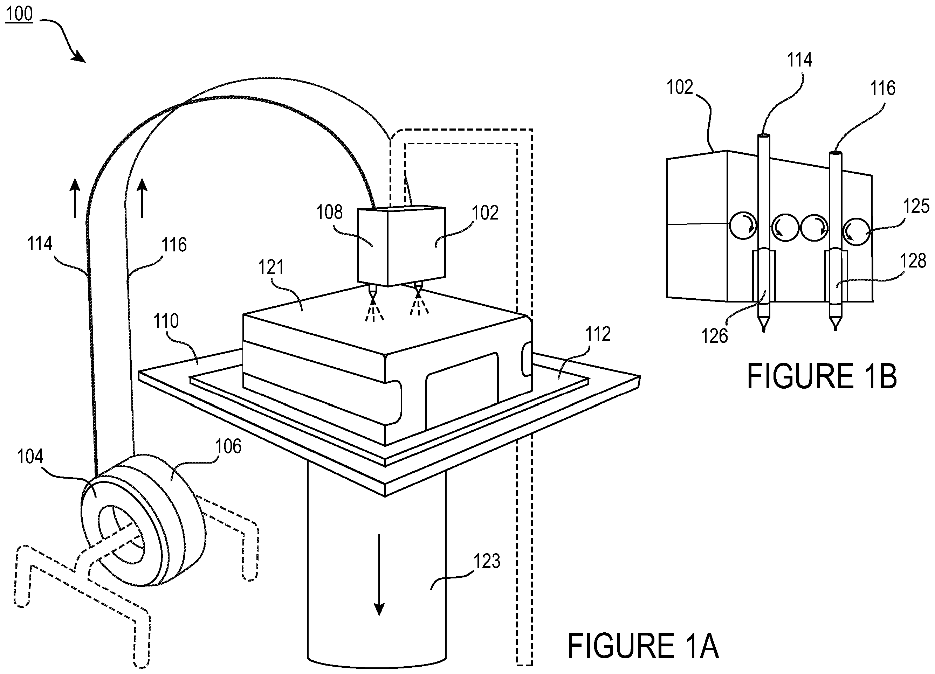

FIGS. 1A-B illustrate a diagram of a conventional 3-D printer using fused deposition modeling (FDM). FDM is an additive manufacturing technique wherein a thermoplastic or other material is extruded through a temperature-controlled print nozzle 102. The print nozzle 102 can be moved in both horizontal and vertical directions by a mechanical device that is under the control of a computer-aided manufacturing (CAM) software package. The 3-D part to be constructed is built one layer at a time, and the layers successively overlap each other in a prescribed manner to form a part 121.

The 3-D printer of FIG. 1A also includes a first spool 104 for providing a first material that is fed to the extrusion head 102 and a second spool for providing a second material that is fed to the extrusion head 102. While in some configurations the material 114 may constitute a build material for forming the successive layers of the part and the material 116 a support material for providing temporary support to accommodate spatial vacancies created by the predetermined shapes of certain structures whose shape may otherwise be compromised by gravity prior to solidifying, the 3-D printing techniques contemplated in this disclosure may obviate the need for a support material by using complex matrix arrays as backing structures.

3-D printer 100 may also include a substrate or base 112 upon which the printing may occur, and a vertically moveable build platform 110. During the 3-D printing process wherein the material 114 is extruded onto a surface of part 121 to form successive layers, the build platform 110 may be configured under software control to gradually move lower in the vertical direction (as indicated by the arrow on support arm 123) to accommodate the space occupied by the increasing number of layers of part 121.

FIG. 1B shows an expanded view of extrusion head 102. Materials 114 and 116 may be fed using rotating drive wheels 125 into extrusion nozzles 126 and 128, respectively. The materials 114 and 116 are melted by the application of heat in respective extrusion nozzles 126 and 128 and thereupon ejected under software control from the nozzles onto the substrate 110, or onto the layers previously disposed on the substrate.

While an FDM printing technique has been described here for illustration purposes, the disclosure herein is not so limited, and any suitable 3-D printing technique may be employed in connection with the description that follows.

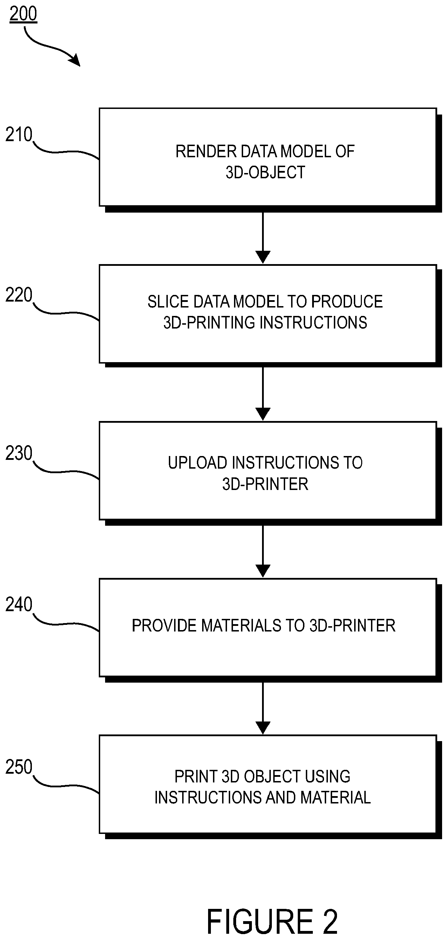

FIG. 2 is a flow diagram 200 illustrating an exemplary process of 3-D printing. A data model of the desired 3-D object to be printed is rendered (step 210). A data model is a virtual design of the 3-D object. Thus, the data model may reflect the geometrical and structural features of the 3-D object, as well as its material composition. The data model may be created using a variety of methods, including 3D scanning, 3D modeling software, photogrammetry software, and camera imaging.

3D scanning methods for creating the data model may also use a variety of techniques for generating a 3-D model. These techniques may include, for example, time-of flight, volumetric scanning, structured light, modulated light, laser scanning, triangulation, and the like.

3-D modeling software, in turn, may include one of numerous commercially available 3-D modeling software applications. Data models may be rendered using a suitable computer-aided design (CAD) package, for example in an STL format. STL files are one example of a file format associated with commercially available CAD software. A CAD program may be used to create the data model of the 3-D object as an STL file. Thereupon, the STL file may undergo a process whereby errors in the file are identified and resolved.

Following error resolution, the data model can be "sliced" by a software application known as a slicer to thereby produce a set of instructions for 3-D printing the object, with the instructions being compatible and associated with the particular 3-D printing technology to be utilized (step 220). Numerous slicer programs are commercially available. Generally, the slicer program converts the data model into a series of individual layers representing thin slices (e.g., 100 microns thick) of the object be printed, along with a file containing the printer-specific instructions for 3-D printing these successive individual layers to produce an actual 3-D printed representation of the data model.

A common type of file used for this purpose is a G-code file, which is a numerical control programming language that includes instructions for 3-D printing the object. The G-code file, or other file constituting the instructions, is uploaded to the 3-D printer (step 230). Because the file containing these instructions is typically configured to be operable with a specific 3-D printing process, it will be appreciated that many formats of the instruction file are possible depending on the 3-D printing technology used.

In addition to the printing instructions that dictate what and how an object is to be rendered, the appropriate physical materials necessary for use by the 3-D printer in rendering the object are loaded into the 3-D printer using any of several conventional and often printer-specific methods (step 240). In fused deposition modelling (FDM) 3-D printers, as indicated above, materials may be loaded as filaments on spools, which are placed on one or more spool holders. The filaments are typically fed into an extruder apparatus which, in operation, heats the filament into a melted form before ejecting the material onto a build plate or other substrate. In selective laser sintering (SLS) printing and other methods, the materials may be loaded as powders into chambers that feed the powder to a build platform. Depending on the 3-D printer, other techniques for loading printing materials may be used.

The respective data slices of the 3-D object are then printed based on the provided instructions using the material(s) (step 250). In 3-D printers that use laser sintering, a laser scans a powder bed and melts the powder together where structure is desired, and avoids scanning areas where the sliced data indicates that nothing is to be printed. This process may be repeated thousands of times until the desired structure is formed, after which the printed part is removed from a fabricator. In fused deposition modelling, as described above, parts are printed by applying successive layers of model and support materials to a substrate. In general, any suitable 3-D printing technology may be employed for purposes of this disclosure.

Like other 3-D printing techniques, the FDM technique has a minimum layer resolution, which may in some configurations be on the order of 0.127 mm or thereabouts, depending on the printer resolution and other factors. As a consequence of this minimum resolution, it becomes apparent that the attempted 3-D printing of an angled surface will result in often unwanted "stair-stepped" artifacts caused by the finite thickness of the successive layers.

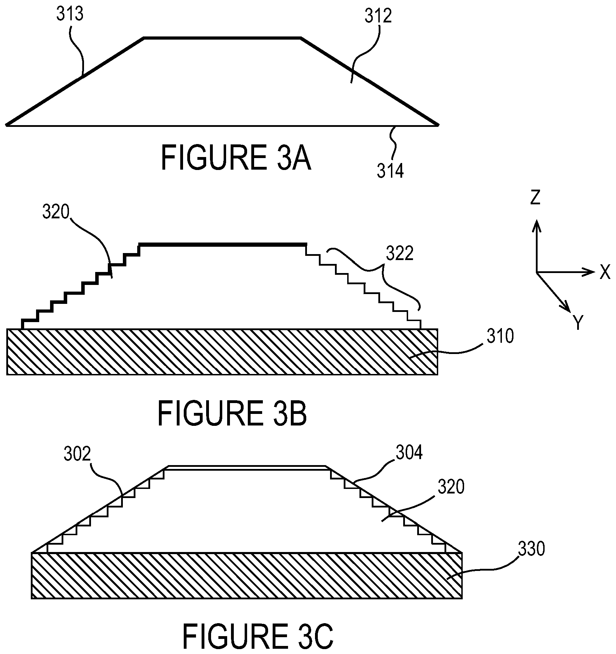

This phenomenon can be appreciated with reference to FIGS. 3A-C, which are illustrations of a desired part 312 and a build plate 310 supporting a resulting 3-D printed part 320. FIG. 3A is a visual representation of a data model of a part 312 to be printed. The part 312 for purposes of this illustration has a first surface 314 that is substantially flat and a second surface 313 that is angled on both ends and that has a flat top surface. The part 312 may, for example, be a panel for use in a transport structure where the surface 313 is intended to represent an exterior portion of the panel such as the external portion of a car door.

FIG. 3B shows part 320 that is 3-D printed on substrate 310 based on the data model of part 312. As can be seen, due to the finite minimal thickness of the layers being deposited, the 3-D printing process generates a stair-stepped effect 322 on the surface of part 320 that is intended to represent one of the angled surfaces 313 (FIG. 3A). As a result, the exterior surface of a part such as a body panel may have undesirable and unaesthetically pleasing jagged edges that must be smoothed out by some other process. Depending on the part being constructed and the specific implementation, the stair-stepped effect 322 that results may add further complications. For example, it may render the part non-compliant with specifications or applicable regulations, or non-functional for a particular purpose.

FIG. 3C shows the part 320 after going through an additional manufacturing step. In particular, the stair-stepped effect 322 is reduced to form substantially flat surfaces 202 and 304 of part 320. One such manufacturing step may involve workers removing part 320 from the 3-D printer, depositing part 320 on a second substrate 330 and applying a hand spray forming technique to smooth the stair-stepped effect.

Conventional spray forming involves casting metal components with homogeneous microstructures via the inert gas atomisation of a liquid metal stream into droplets and the deposition of semi-solid sprayed droplets onto a shaped substrate. The substrate collects the droplets and solidifies them into a coherent preform. In one example of the process, an alloy is melted, normally in an induction furnace, then the molten metal is slowly poured through a conical tundish into a small-bore ceramic nozzle. The molten metal exits the furnace and is broken up into droplets by an atomizer. The droplets then proceed downwards to impact a substrate. The process is arranged such that the droplets strike the substrate while in the semi-solid condition. This process provides sufficient liquid fraction to 'stick' the solid fraction together. Deposition continues, gradually building up a spray formed part, such as a billet, of metal on the substrate. Spray forming may use a chamber in the shape of the part to be formed.

Spray forming may involve applying finishing procedures on metal structures as indicated above, or forming metal structures in a chamber. More specifically, metal parts may be spray formed in a temperature controlled chamber, which is typically in a shape that is consistent with that of the final part. In current metal spray forming processes, dedicated equipment is needed such as the chamber, nozzle, atomiser, etc. In addition, the metal parts are limited by the constraints of the chamber and can only be shaped to substantially adhere to the geometry of the chamber.

Accordingly, in one embodiment, a spray forming technique is incorporated as part of a 3-D printer. The 3-D printer includes a flexible, computer-controlled nozzle having six degrees of freedom that is capable of being manipulated in all three X-Y-Z directions and inclined at a variety of angles relative to the printer build plate. The 3-D printer incorporating the spray former may, depending on the embodiment, be used for both for finishing of surfaces of existing parts and for wholesale construction of parts. In other exemplary embodiments, the spray forming 3-D printer is not limited to spray forming of metals and may additionally or alternatively employ spray forming of plastics and other materials. Thus, the 3-D printer may incorporate a spray former that broadly includes one or more mechanical assemblies for converting a desired material into droplets and spray forming the material in a manner specified by the 3-D printing instructions and/or the CAM program associated with the 3-D printer.

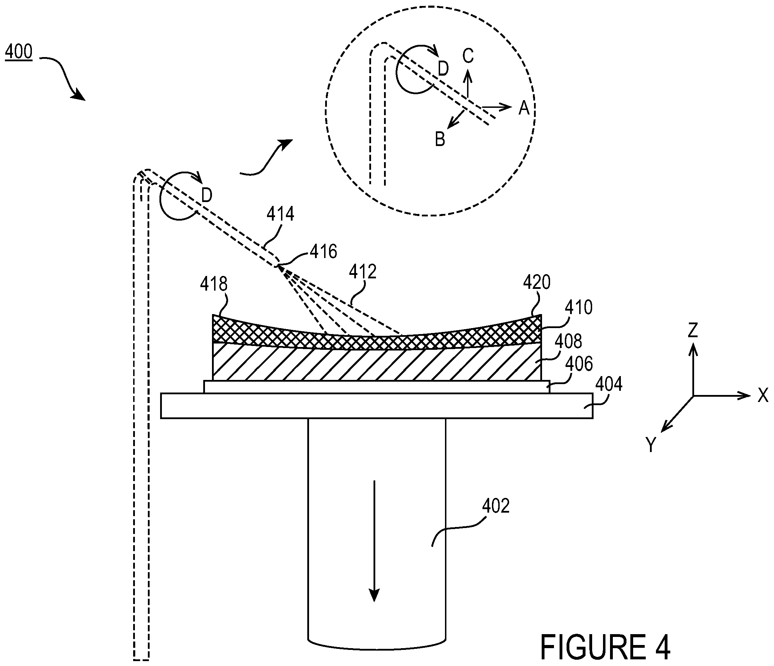

FIG. 4 shows a conceptual diagram of a 3-D printer 400 employing spray forming. The 3-D printer includes support arm 402, build plate 404, and substrate 406. In this embodiment, a tooling shell 408 is disposed on a surface of substrate 406. In one exemplary embodiment, the tooling shell 408 was previously machined or 3-D printed and was placed on the substrate 408 after its construction.

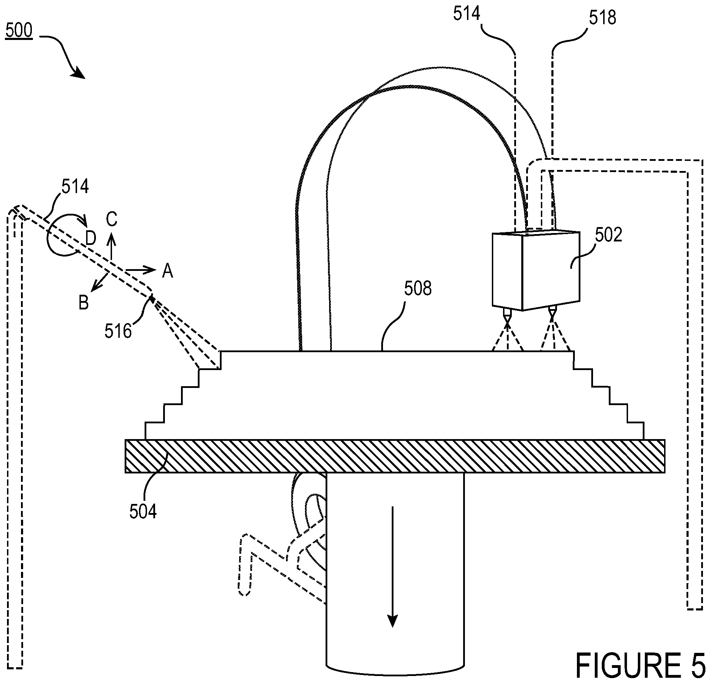

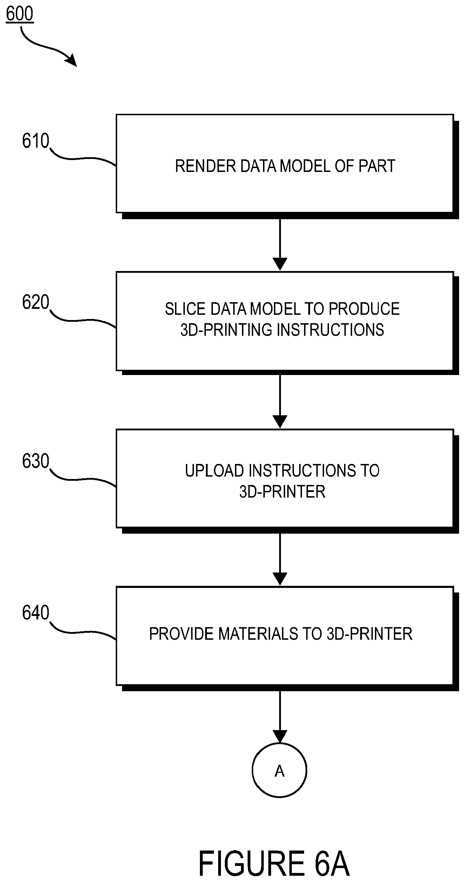

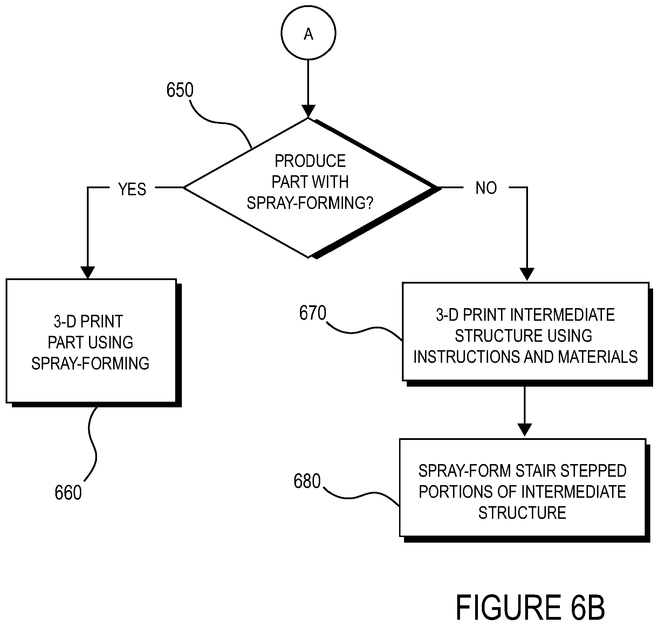

In another exemplary embodiment as described further below with reference to FIGS. 5 and 6, the tooling shell 408 may be 3-D printed on 3-D printer 400. For example, 3-D printer 400 may include a conventional computer-controlled print extruder (not shown) which may 3-D print the mold using any of a variety of known methods (SLS, FDM, *etc*.). In another exemplary embodiment, the mold is spray formed using 3-D printer 400.

A robotic arm 414 under computer control of the 3-D printer may be used to spray form a part 410, such as a panel, on a surface of the tooling shell 408. In other exemplary embodiments, the spray forming is deposited directly on substrate 406 to spray form the part 410. The nozzle 416 of robotic arm 414 shoots droplets 412 of material onto the tooling shell 408 to thereby create the part 410 as described above.

As the part 410 is formed by the 3-D printer using spray forming, it will be appreciated that the angled or inclined sections 418 and 420 of part 410 can be created without any appreciable stair-stepped effect. Accordingly, the use of spray forming as part of and under computer control of the 3-D printer enables a manufacturer to form a part 410 that requires no further finishing step. Accordingly, a smoothened part may be provided in a single step or on a single 3-D printer.

In an exemplary embodiment, robotic arm 414 can be manipulated in a variety of directions and angles. For example, robotic arm 414 may be moved in one or more of the A, B or C directions (or directions at any point in between), which may correspond respectively to coordinate axes X, Y, Z of the 3-D printer. For example, in another exemplary embodiment, robotic arm 414 can be inclined at substantially any angle in order to perform spray forming at a variety of angles. In yet another embodiment, robotic arm 414 may be configured to rotate or twist as shown by the arrow and corresponding designation D. In an exemplary embodiment, the robotic arm 414 is equipped with six degrees of freedom. In one embodiment, the robotic arm 414 is designed to be thin relative to the generally bulky print extruder 502 and associated mechanical assembly. This gives the robotic arm 414 additional flexibility to move about the substrate.

Conventional 3-D printers that perform plastic extrusion generally have a limited ability to alter angles of the print extruder. Such conventional printers typically employ a pivot point for the print nozzle in lieu of a thin, flexible robotic arm. For this reason, the extruders on 3-D printers typically do not have the six degrees of freedom such that they can have significant flexibility in their degrees of movement. One reason for this limitation is that conventional print nozzles typically have thicker diameters and cannot be manipulated easily about different axes, in contrast to the sleek robotic arm 414, whose range of diameters may be made very thin due in part to the intrinsic nature of the spray forming technique and the small size of droplets required from the spray nozzle.

In addition, due to the thickness of the extruded material and other constraints, material extruded from conventional printers may be adversely affected by gravity when the extruder angle is changed, for example, to a slightly angled position to deposit material. That is, the print extruder in the conventional 3-D printer is often bulky, carries more inertia, and is limited in motion due to its pivot point connection to the remainder of the extrusion system, so that its flexibility to change angles and directions is accordingly limited. This phenomenon is similar in principal to attempting to write upside down with a ballpoint pen. 3-D printing using spray forming lacks this limitation. The spray forming technologies enables the 3-D printer to spray the light droplets on the substrate or part at essentially any angle, including in an upward direction, and the spray mechanic is not substantially adversely affected by gravity.

Because the robotic arm 414 and spray forming capability is incorporated as part of the 3-D printer, the arm 414 can be controlled and directed under computer control using instructions provided directly to the 3-D printer. In addition, in contrast to the conventional spray forming method wherein a chamber constrains the part formation to adhere to a single or a limited geometry, the 3-D printer as disclosed herein can spray form parts in three dimensions, with such parts having a variety of possible geometries and features under software control.

The mechanical assembly of the robotic arm 414 and printer may vary depending on the embodiment. Where spray forming of metals is performed, the assembly may incorporate a mechanism for heating the metal, an atomiser, and other elements. In another embodiment, robotic arm 414 of the 3-D printer may be configured to spray resins onto a mold or a substrate for forming or finishing parts. Generally, in considering the spray forming of different types of materials, molten materials should not be overly viscous to thereby render them too difficult for nozzle 416 to eject the droplets. Accordingly, in an exemplary embodiment, nozzle 416 of robotic arm 414 may include an assembly for adjusting the viscosity of the target material to be used in the spray forming process. In one embodiment, the assembly may be dynamically adjusted according to software as a function of the material to be used in the spray forming process. In addition, for plastics, a heating mechanism may be included in or proximate to nozzle 416 for facilitating flow of the material.

Where thermoset resins are used, the resin and the hardener are generally mixed in some ratio and then applied. Pre-mixing the resin and the hardener and then attempting to spray form the resulting viscous material gives rise to inherent difficulties. For example, pre-mixing the resin and hardener and spray forming the combined material may cause the material to cure within the nozzle, thereby clogging the nozzle.

Accordingly, in another exemplary embodiment, robotic arm 414 may include two nozzles 416 (only one shown), each which constitutes a separate spray forming head. A first such nozzle may spray the resin and the second nozzle may spray the hardener. This technique obviates the difficulties inherent in pre-mixing and spraying the combined resin and hardener.

The above-described 3-D printing techniques can be used either to smooth (finish) a part such as a panel using spray forming, or to create a part.

In spray forming plastics, the diameter of the nozzle 416 is generally very small, in some embodiments being on the order of approximately 50 µm. Because the diameter of nozzle 416 is small, the corresponding thickness of the material exiting nozzle 416 may be negligible, such that substantially no stair-stepped effect is observed when 3-D printing parts using the spray forming technique.

The robotic arm 414 is advantageous for incorporation into the 3-D printer 400 for use in spray forming because, among other reasons, such robotic assemblies may be controlled by a data model and related instructions as are used in 3-D printers.

Referring back to FIG. 4, in an example where the part 410 to be formed constitutes an exterior body panel of a vehicle, the material forming the panel can be sprayed over the 3-D printed tooling shell 408 (or the substrate 406 in other embodiments). In this manner, imperfections that arise due to surface properties of the 3-D printed tooling shell 408 are present only on the B side of the final panel where the part 410 meets the surface of tooling shell 408. In contrast, the A side (surface 418, 420 of part 410) of the panel may be made to be substantially flawlessly smooth, thereby satisfying Class A vehicular surface requirements.

In another exemplary embodiment, the 3-D printer as described above can be used to spray resin on metal or plastic 3-D printed tools to smoothen the surface of the tools.

In the embodiments involving spray forming of metals, various techniques and processes may be suitable for use in conjunction therewith including plasma deposition, physical vapor deposition, chemical vapor deposition, and the like.

Using the techniques described herein, smooth metal or plastic parts and panels having complex geometries can be spray formed from the ground up under software control of the printers. Layers can be sprayed from a build plate 404 or, alternatively, a first material can be used as a base 406 and a second material can be used for the spray forming process.

In another exemplary embodiment, a spray forming mechanism is integrated with a conventional 3-D print extruder to form a single 3-D printer. The 3-D printer according to this exemplary embodiment is capable of dual (or multiple) functions; namely, a conventional extruder (such as SLS, FDM, etc.) can be used to 3-D print a part and a spray former can be used either to form parts or to provide finishing for the part printed by the conventional print extruder.

FIG. 5 shows a diagram of a 3-D printer 500 integrating spray forming and FDM printing capability. While an FDM assembly is shown for purposes of illustration, it will be appreciated that any conventional 3-D printing technique may be integrated with the spray forming mechanism. The spray forming mechanism includes robotic arm 514, nozzle 516, and associated control mechanism (not shown) guided by printer software. As previously shown with reference to FIG. 4, robotic arm 514 of FIG. 5 may be under control of the 3-D printer instructions and can be manipulated at a variety of angles and directions, including in the A, B, C and D directions.

In the embodiment shown, part 508 is 3-D printed on build plate 504 (or an intervening substrate or foam base) using print extruder 502 and one or both of print materials 514 and 518. As discussed in connection with previous embodiments, the angled portions of part 508 are characterized by a stair-stepped effect, the scale of which is exaggerated here for clarity. After part 508 is 3-D printed via print extruder 502, nozzle 516 of robotic arm applies spray forming to finish the part and thereby reduce or eliminate the stair-stepped effect, such that part 508 will have smooth angledsurfaces as noted previously with reference to FIGS. 5A and 5C. Depending on the embodiment, metals, plastics, or composites may be spray formed.

FIGS. 6A-B are a flow diagram illustrating an exemplary method for 3-D printing using spray forming. Referring to FIG. 6A, at 610, a data model of the part to be printed is rendered. At 620, the data model is sliced into a plurality of layers to produce 3-D printing instructions. Depending on the application, these instructions may include instructions for conventional 3-D printing (such as SLS or FDM), spray forming, or both. At 630, the instructions are uploaded to the 3-D printer.

At 640, materials are provided to the 3-D printer 500 for use in 3-D printing the object. These materials may include one or more of plastics, metals, resins, and composites in their appropriate form for use in the specific 3-D printing technique employed. This step may also include providing materials for use in spray forming a part. In an exemplary embodiment, the materials are provided to different functional mechanisms within the 3-D printer. In other embodiments, the spray forming mechanism may draw its material from a common source as the conventional 3-D print head. It should be noted that step 640 need not occur in any particular order, and may occur prior to any of the steps 610-630 or later, as long as the material is made available at the actual time of printing the part.

Referring to FIG 6B, at 650, the 3-D printer 500 may determine, based on the instructions, whether the part to be produced will be formed via spray forming (as in the application of material via robotic arm 514 and nozzle 516 in FIG. 5) or via a conventional 3-D printing technique (as in the application of one or more materials 514, 518 via print extruder 502 in FIG. 5). If it is determined that the part will be spray formed, then at 660, the 3-D printer 500 will form the part on substrate 504 or on another base plate. Conversely, if it is determined that the part will be 3-D printed using the conventional print extruder 502, then at step 670 the 3-D printer 500 will proceed to deposit successive layers onto the substrate until part 508 is formed. It will be appreciated that the angled portions of part 508 may include the stair-stepped effect as previously described.

In an exemplary embodiment, after the part 508 is printed using the 3-D print extruder 502 (FIG. 5), then at 680, the 3-D printer 500 may spray form the surface of part 508, including the stair-stepped portions, to finish the part and thereby smoothen the angled portions of part 508. In this exemplary embodiment, the part 508 printed using conventional means constitutes an intermediate structure that is finished using the spray form portion of 3-D printer 500. In another exemplary embodiment and depending on the instructions provided to 3-D printer 500, the robotic arm 514 may contemporaneously provide finishing on portions of intermediate structure 508 while the print extruder 502 is depositing layers of material. In another exemplary embodiment, based on a different set of instructions, 3-D printer 500 may 3-D print the structure 508 in part using print extruder 502 and in part using spray forming via robotic arm 514 and nozzle 516.

While for purposes of clarity the robotic arm 514 is shown to be small in scale relative to build plate 504 and the part 508, in other embodiments robotic arm 514 may be constructed in any flexible manner. For example, robotic arm 514 may be longer, have a wider range, and have a more flexible geometry to enable it to spray form the part 508 from all angles, or a wide range of angles including an inverted angle relative to the floor.

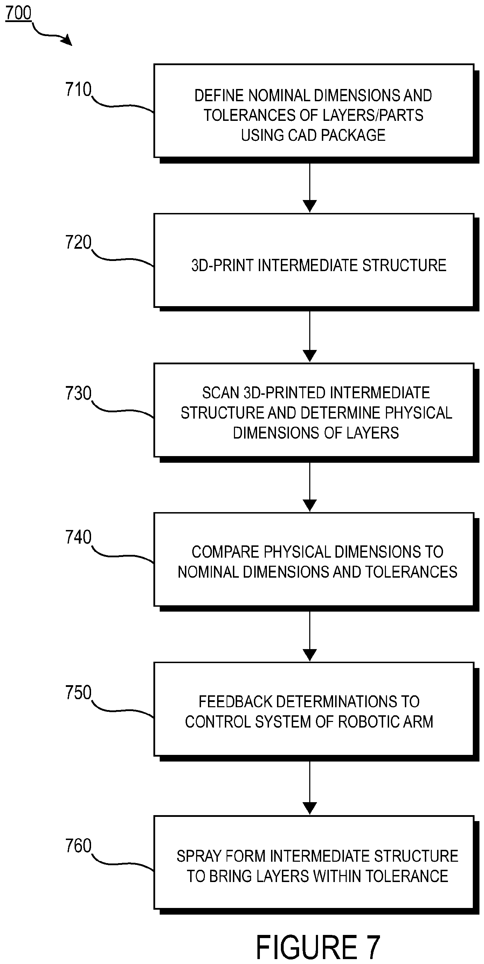

In another exemplary embodiment shown in the flow chart 700 of FIG. 7, the 3-D printer employs *in situ* monitoring of stair-stepped effects or other variations of a 3-D printed structure. During programming using the CAD models or another suitable software technique, nominal dimensions and tolerances of one or more layers constituting the structure may be defined (step 710). For example, a nominal dimension of a layer thickness (at an edge or otherwise) may be defined along with a corresponding tolerance of deviation from the nominal dimension. As an illustration, if a nominal thickness for a particular layer is one inch (2.54 cm), a corresponding tolerance may be +/- 0.005 inches (0.0127 cm), or any suitable number. Other dimensions may be similarly defined. For example, a specified nominal dimension of an angle or contour of an inclined surface of the structure may be defined along with a corresponding tolerance for the angle or contour.

The 3-D printer prints an intermediate structure (step 720). The 3-D printer may scan the printed intermediate structure and thereby determine the actual physical dimension at issue, such as the thickness of the layers, the measurement of stair-stepped effects in an angled portion, *etc.* (step 730). In one exemplary embodiment, the scanning is performed after the 3-D printed intermediate structure is rendered. In another exemplary embodiment, the scanning is performed in real time while the intermediate structure is being printed. Having received the actual physical dimension(s) at issue, the 3-D printer and/or its control system or associated software application may compare the determined physical dimension(s) to the nominal dimension(s) and the respective tolerance(s) (step 740).

The 3-D printer may then provide feedback to the control system of the robotic arm, such as, for example, when the determined physical dimensions fall outside the tolerance of the identified nominal dimensions (step 750). Using this feedback, the 3-D printer may spray form the intermediate structure to provide material to bring the affected layers and/or structures within the specified tolerances (step 760). Thus, for example, the spray former may smooth out rough edges and/or add thickness to portions of the structure. Depending on the embodiment, the spray forming may be performed in real time during the 3-D printing of the intermediate structure (using an FDM, SLS or another technique). Alternatively, the spray forming may be performed after the intermediate structure is complete.

The previous description is provided to enable any person skilled in the art to practice the various aspects described herein. Various modifications to these exemplary embodiments presented throughout this disclosure will be readily apparent to those skilled in the art, and the concepts disclosed herein may be applied to 3-D printing techniques using spray forming. Thus, the claims are not intended to be limited to the exemplary embodiments presented throughout the disclosure, but are to be accorded the full scope consistent with the language claims. All structural and functional equivalents to the elements of the exemplary embodiments described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims.

## Claims

1. A method of three dimensional (3-D) printing a structure (312), comprising:
receiving instructions for printing the structure (312), the instructions based on a data model of the structure;
receiving material (114); and
printing the structure (312) based on the instructions, the printing **characterized by**:
printing successive layers of the material into an intermediate structure (320) having a stair-stepped surface portion (322); and
spray forming the material onto the stair-stepped surface portion of the intermediate structure (320) to produce the structure (312) by smoothing the stair-stepped surface portion.

2. The method of claim 1, wherein the spray forming comprises spraying one or more layers of the material to produce the structure (312).

3. The method of claim 1, wherein the spray forming comprises directing, responsive to the instructions, a moveable arm (414) comprising a nozzle (416) to spray the material to produce the structure (312).

4. The method of claim 1, wherein the structure (312) comprises a panel suitable for use in a transport structure.

5. The method of claim 1, wherein the material comprises one or more of resin, metal, plastic, or carbon fiber.

6. The method of claim 1, wherein the spray forming comprises spraying a resin and a hardener.

7. The method of claim 6, wherein the spray forming further comprises directing the resin into a first nozzle coupled to a moveable arm for spraying the resin and directing the hardener into a second nozzle coupled to the moveable arm for spraying the hardener.

8. The method of claim 1, wherein the spray forming comprises directing, responsive to the instructions, a movable arm (414) comprising a nozzle (416) to spray form the material at a plurality of different angles to smoothen the stair-stepped portion.

9. The method of claim 1, wherein the structure comprises one or more of resin, metal, plastic, or a composite material.

10. The method of claim 1, wherein the material comprises a panel suitable for use in a transport structure.

11. The method of claim 1, further comprising receiving a second material, and wherein the spray forming further comprises spray forming the second material onto the stair-stepped surface portion.

12. The method of claim 1, further comprising:
receiving a nominal dimension and a corresponding tolerance for one or more layers of the structure;
wherein the printing further comprises:
scanning the intermediate structure to determine a physical dimension of the one or more layers; and
spray forming selected portions of the intermediate structure to produce the structure such that the physical dimension falls within the received tolerance of the nominal dimension.

13. The method of claim 12, wherein the nominal dimension comprises a thickness of the one or more layers.

14. The method of claim 12, wherein the nominal dimension comprises an angle or contour of an inclined surface of the structure.

## Patentansprüche

1. Verfahren zum dreidimensionalen (3-D) Drucken einer Struktur (312), umfassend:
Empfangen von Anweisungen zum Drucken der Struktur (312), wobei die Anweisungen auf einem Datenmodell der Struktur basieren;
Empfangen von Material (114); und
Drucken der Struktur (312) basierend auf den Anweisungen, wobei das Drucken **gekennzeichnet ist durch**:
Drucken aufeinanderfolgender Schichten des Materials zu einer Zwischenstruktur (320), die einen treppenförmigen Oberflächenabschnitt (322) aufweist; und
Sprühformen des Materials auf den treppenförmigen Oberflächenabschnitt der Zwischenstruktur (320), um die Struktur (312) **durch** Glätten des treppenförmigen Oberflächenabschnitts herzustellen.

2. Verfahren nach Anspruch 1, wobei das Sprühformen das Sprühen einer oder mehrerer Schichten des Materials umfasst, um die Struktur (312) herzustellen.

3. Verfahren nach Anspruch 1, wobei das Sprühformen das Lenken eines beweglichen Arms (414), der eine Düse (416) umfasst, als Reaktion auf die Anweisungen umfasst, um das Material zu sprühen, um die Struktur (312) herzustellen.

4. Verfahren nach Anspruch 1, wobei die Struktur (312) eine Platte umfasst, die zur Verwendung in einer Transportstruktur geeignet ist.

5. Verfahren nach Anspruch 1, wobei das Material eines oder mehrere aus Harz, Metall, Kunststoff oder Kohlefaser umfasst.

6. Verfahren nach Anspruch 1, wobei das Sprühformen das Sprühen eines Harzes und eines Härters umfasst.

7. Verfahren nach Anspruch 6, wobei das Sprühformen weiter das Leiten des Harzes in eine erste Düse, die mit einem beweglichen Arm zum Sprühen des Harzes gekoppelt ist, und das Leiten des Härters in eine zweite Düse, die mit dem beweglichen Arm zum Sprühen des Härters gekoppelt ist, umfasst.

8. Verfahren nach Anspruch 1, wobei das Sprühformen das Lenken eines beweglichen Arms (414), der eine Düse (416) umfasst, als Reaktion auf die Anweisungen umfasst, um das Material an einer Vielzahl von verschiedenen Winkeln zu sprühen, um den treppenförmigen Abschnitt zu glätten.

9. Verfahren nach Anspruch 1, wobei die Struktur eines oder mehrere aus Harz, Metall, Kunststoff oder einem Verbundmaterial umfasst.

10. Verfahren nach Anspruch 1, wobei das Material eine Platte umfasst, die zur Verwendung in einer Transportstruktur geeignet ist.

11. Verfahren nach Anspruch 1, weiter umfassend das Aufnehmen eines zweiten Materials, und wobei das Sprühformen weiter das Sprühformen des zweiten Materials auf den treppenförmigen Oberflächenabschnitt umfasst.

12. Verfahren nach Anspruch 1, weiter umfassend:
Empfangen einer Nennabmessung und einer entsprechenden Toleranz für eine oder mehrere Schichten der Struktur;
wobei das Drucken weiter umfasst:
Abtasten der Zwischenstruktur, um eine physische Abmessung der einen oder mehreren Schichten zu bestimmen; und
Sprühformen ausgewählter Abschnitte der Zwischenstruktur, um die Struktur herzustellen, sodass die physische Abmessung innerhalb der empfangenen Toleranz der Nennabmessung liegt.

13. Verfahren nach Anspruch 12, wobei die Nennabmessung eine Dicke der einen oder mehreren Schichten umfasst.

14. Verfahren nach Anspruch 12, wobei die Nennabmessung einen Winkel oder eine Kontur einer geneigten Oberfläche der Struktur umfasst.

## Revendications

1. Procédé d'impression en trois dimensions (3-D) d'une structure (312) comprenant :
la réception d'instructions pour l'impression de la structure (312), les instructions étant basées sur un modèle de données de la structure ;
la réception de matériau (114) ; et
l'impression de la structure (312) sur la base des instructions, l'impression étant **caractérisée par** :
l'impression de couches successives du matériau dans une structure intermédiaire (320) ayant une portion de surface en marche d'escalier (322) ; et
la formation par pulvérisation du matériau sur la portion de surface en marche d'escalier de la structure intermédiaire (320) pour produire la structure (312) par lissage de la portion de surface en marche d'escalier.

2. Procédé selon la revendication 1, dans lequel la formation par pulvérisation comprend la pulvérisation d'une ou plusieurs couches du matériau pour produire la structure (312).

3. Procédé selon la revendication 1, dans lequel la formation par pulvérisation comprend la direction, en réponse aux instructions, d'un bras mobile (414) comprenant une buse (416) pour pulvériser le matériau afin de produire la structure (312).

4. Procédé selon la revendication 1, dans lequel la structure (312) comprend un panneau adapté pour l'utilisation dans une structure de transport.

5. Procédé selon la revendication 1, dans lequel le matériau comprend un ou plusieurs parmi la résine, le métal, la matière plastique ou la fibre de carbone.

6. Procédé selon la revendication 1, dans lequel la formation par pulvérisation comprend la pulvérisation d'une résine et d'un agent durcissant.

7. Procédé selon la revendication 6, dans lequel la formation par pulvérisation comprend en outre la direction de la résine dans une première buse couplée à un bras mobile pour la pulvérisation de la résine et la direction de l'agent durcissant dans une seconde buse couplée au bras mobile pour la pulvérisation de l'agent durcissant.

8. Procédé selon la revendication 1, dans lequel la formation par pulvérisation comprend la direction, en réponse aux instructions, d'un bras mobile (414) comprenant une buse (416) pour former par pulvérisation le matériau à une pluralité d'angles différents pour lisser la portion en marche d'escalier.

9. Procédé selon la revendication 1, dans lequel la structure comprend un ou plusieurs parmi la résine, le métal, la matière plastique ou un matériau composite.

10. Procédé selon la revendication 1, dans lequel le matériau comprend un panneau adapté pour l'utilisation dans une structure de transport.

11. Procédé selon la revendication 1, comprenant en outre la réception d'un second matériau, et dans lequel la formation par pulvérisation comprend en outre la formation par pulvérisation du second matériau sur la portion de surface en marche d'escalier.

12. Procédé selon la revendication 1, comprenant en outre :
la réception d'une dimension nominale et d'une tolérance correspondante pour une ou plusieurs couches de la structure ;
dans lequel l'impression comprend en outre :
le balayage de la structure intermédiaire pour déterminer une dimension physique des une ou plusieurs couches ; et
la formation par pulvérisation de portions sélectionnées de la structure intermédiaire pour produire la structure de sorte que la dimension physique tombe dans la tolérance reçue de la dimension nominale.

13. Procédé selon la revendication 12, dans lequel la dimension nominale comprend une épaisseur des une ou plusieurs couches.

14. Procédé selon la revendication 12, dans lequel la dimension nominale comprend un angle ou contour d'une surface inclinée de la structure.
